# EUROPEAN PATENT APPLICATION

(11) **EP 4 840 764 A2**
(43) Date of publication of application: **18.11.2026**
(21) Application number: 26209063.2
(22) Date of filing: 03.05.2022
(51) Int. Cl.: B64F 1/36

(54) **A PRECONDITIONED AIR UNIT**

(30) Priority: 26.10.2021 EP 21204860
(62) Document number(s) of the earlier application(s) in accordance with Art. 76 EPC: 22171471.0 / 4 173 970
(71) Applicant: Illinois Tool Works Inc., Glenview IL 60025 (US)
(72) Inventor: DAHL, Soren Risgaard, Glenview, 60025 (US); NIELSEN, Bo Vork, Glenview, 60025 (US); SCHRODER, Lars, Glenview, 60025 (US)
(74) Representative: HGF

(57) **Abstract**

The present disclosure provides a preconditioned air (PCA) unit for supplying preconditioned air to an aircraft parked on the ground, and a method of operating the PCA unit. The PCA unit comprises an air duct with an air inlet and an air outlet connectable to a hose for conveying preconditioned air towards an aircraft. The PCA unit also includes a blower fan (26) operable to generate air flow through the air duct, the blower fan being powered by a variable frequency drive, VFD (25e). The PCA unit also includes a heater unit (19) operable to heat the air flow passing through the air duct. The PCA unit includes a DC bus (36) arranged to provide electrical power to the blower fan and the heater unit. The PCA unit also includes a controller (37) operable to control the blower fan (26) and the heater unit (19). The controller is configured to operate the VFD (25e) to brake the blower fan and simultaneously operate the heater unit (19) to dissipate electrical energy regenerated by the blower fan during braking.

## Description

### Technical Field of Invention

The invention relates to a preconditioned air unit, in particular a preconditioned air unit for attachment to an aircraft at a boarding gate.

### Background

A preconditioned air (PCA) unit is used to provide preconditioned (i.e., heated or cooled) air to an aircraft parked on the ground. By connected the aircraft to a PCA unit the aircraft does not have to operate its auxiliary power unit (APU) to generate cooled or heated air onboard the aircraft.

Typically, the PCA unit is mounted to a passenger bridge at a boarding gate and is connected to the aircraft via a hose. A PCA unit typically includes an air conditioning unit arranged to cool air, which is then conveyed into the aircraft via the hose. Often, the PCA unit also includes a heater unit that is operable to heat air that is conveyed to the aircraft via the hose. The air conditioning unit or heater are selectively operated depending on the ambient temperature, for example so that when ambient temperatures are high air conditioning unit is operated to provide cooled air to the aircraft, and when ambient temperatures are low the heater is operated to provide heated air to the aircraft.

### Summary of Invention

According to the present invention, there is provided a preconditioned air, PCA, unit for providing preconditioned air to an aircraft parked on the ground, the PCA unit comprising:
a refrigerant system operable to cool air as it passes through the PCA unit,
a heater unit comprising one or more DC heater elements operable to heat air as it passes through the PCA unit, and
a variable frequency drive, VFD, configured to provide power to the heater unit and the refrigerant system.

In examples, the refrigerant system and/or the heater unit are part of a module that is removably mountable to the PCA unit, in particular an air duct of the PCA unit.

In examples, the PCA unit may further comprise a controller configured to control the PCA unit such that:
in a cooling mode the heater unit is disconnected and the VFD is controlled to output three-phase power to a compressor of the refrigerant system; and
in a heating mode the heater unit is connected and the VFD is controlled to output three-phase power with zero degrees phase alignment to the compressor of the refrigerant system and to the heater unit.

In examples, in the heating mode the VFD is controlled to output three phase pulsed DC power.

In examples, in the heating mode the controller is configured to operate the VFD to vary a waveform of the output power to control the power provided to the heater element. In particular, the controller is configured to operate the VFD to vary a pulse width and/or height of the output power to control the power provided to the heater element.

In examples, the PCA unit may comprise three power cables connecting the VFD to the compressor of the cooling unit. The heater unit is connected to the three power cables. In examples, the heater unit comprises three heater elements or three groups of heater elements, and each heater element or group of heater elements may be connected to one of the three power cables. The three power cables may connect a different phase of the power output from the VFD to the compressor. The PCA unit may include a plurality of switches to independently connect or disconnect each of the plurality of heater elements or groups of heater elements. The controller may be configured to open and close the plurality of switches to control the heater unit.

In an alternative example, the heater element comprises one cable connected to each of the three power cables at the output of the VFD. The one cable may be connected to all of the heater elements or groups of heater elements. The controller may be configured to vary a waveform of the output power to control the power provided to the heater element. In particular, the controller is configured to operate the VFD to vary a pulse width and/or height and/or frequency of the output power to control the power provided to the heater element.

According to a further aspect of the present invention there is provided a preconditioned air, PCA, unit for supplying preconditioned air to an aircraft parked on the ground, the PCA unit comprising:
an air duct with an air inlet and an air outlet connectable to a hose for conveying preconditioned air towards the aircraft, and
an air conditioning module removably mountable so that at least a part of the air conditioning module is positioned in the air duct between the air inlet and the air outlet, wherein the air conditioning module comprises a heater unit operable to heat air as it passes through the air duct.

In examples, the air conditioning module further comprises a refrigerant system operable to cool air as it passes through the air duct. In examples, the refrigerant system comprises a refrigerant circuit having an evaporator arranged to extend across at least a portion of the air duct. In examples, the heater unit is disposed between the refrigerant system and the air outlet. In examples, the evaporator and the heater element extend substantially parallel to each other across at least a portion of the air duct.

In examples, the PCA unit comprises a variable frequency drive, VFD, operable to provide power to the heater unit and the refrigerant system. The VFD may be configured to output a variable frequency power to a compressor of the refrigerant system. The VFD may be configured to output a variable frequency power to the heater unit. In examples, the PCA unit may further comprise a controller. The controller may be configured to control the PCA unit such that:
in a cooling mode the heater unit is disconnected and the VFD is controlled to output three-phase power to a compressor of the refrigerant system; and
in a heating mode the heater unit is connected and the VFD is controlled to output three-phase power with zero degrees phase alignment to the compressor of the refrigerant system and to the heater unit.

The PCA unit may comprise one or more switches operable to connect or disconnect the heater unit and the VFD. The controller may be configured to open and close the one or more switches. The controller may be configured to vary a waveform of the pulsed DC output power of the VFD to the heater unit to control the power provided to the heater unit. The controller may be configured to control output power of the VFD to the compressor of the refrigeration system based on a detected air temperature in the air duct.

In examples, the PCA unit may further comprise a second air conditioning module removably mountable between the air inlet and the air conditioning module. The second air conditioning module may comprise a second refrigerant system having an evaporator arranged to extend across at least a portion of the air duct. In examples, the second air conditioning module does not comprise a heater unit. In examples, the PCA unit may comprise a third, fourth, etc... air conditioning module removably mountable between the air inlet and the air conditioning module. Accordingly, a plurality of refrigeration systems can act to successively cool air as it passes through the air duct.

In examples, the heater unit comprises at least one heater element arranged to extend across at least a portion of the air duct. In examples, the heater unit comprises a plurality of heater elements arranged to extend across at least a portion of the air duct. In examples, the heater unit comprises a plurality of groups of heater elements arranged to extend across at least a portion of the air duct, for example three groups of heater elements. The plurality of heater elements or groups of heater elements may be connected in parallel. A plurality of switches may be provided to independently connect or disconnect each of the plurality of heater elements or groups of heater elements. The controller may be configured to open and close the plurality of switches to control the heater unit.

In examples, the air conditioning module may further comprise a baffle extending at least partly across the air duct to interrupt air flow through the air duct. The baffle may be configured to ensure uniform air flow across the air conditioning module or over / through the heater elements of the heater unit.

According to a further aspect of the present invention, there is provided a method of operating a preconditioned air, PCA, unit,
wherein the PCA unit comprises:
an air duct with an air inlet and an air outlet connectable to a hose for conveying preconditioned air towards the aircraft,
a blower fan operable to generate air flow through the air duct, the blower fan being powered by a variable frequency drive, VFD,
a heater unit operable to heat the air flow passing through the air duct, and a DC bus arranged to provide electrical power to the blower fan and the heater unit,
and wherein the method comprises operating the VFD to brake the blower fan and simultaneously operating the heater unit to dissipate electrical energy regenerated by the blower fan during braking.

Accordingly, electrical energy regenerated during braking of the blower fan is dissipated by the heater unit, preventing possible over-voltage in the DS bus. In examples, the VFD is operated to brake the blower fan before the PCA unit is disconnected from an aircraft. In examples, the PCA unit further comprises one or more refrigerant systems, each having a compressor. In such examples, the VFD may be operated to brake the blower fan after the compressors have been deactivated. In examples, the VFD is operated under dynamic braking. In examples, the method further comprises deactivating the heater unit after the blower fan has stopped rotating. The method may further comprise detecting rotation of the blower fan, and/or detecting the regenerated electrical energy in order to detect rotation of the blower fan.

### Brief Description of Drawings

Example embodiment(s) of the invention are illustrated in the accompanying drawings, in which:
**FIG. 1** illustrates a perspective view of an aircraft parked on the ground, at a passenger bridge, with a preconditioned air, PCA, unit mounted to the passenger bridge;
**FIG. 2** illustrates the PCA unit of FIG. 1;
**FIG. 3** illustrates a first air conditioning module of the PCA unit of FIG. 2;
**FIG. 4** illustrates a second air conditioning module of the PCA unit of FIG. 2;
**FIG. 5A** illustrates an example air conditioning module of the PCA unit of FIG. 2, with a heater unit;
**FIG. 5B** illustrates the heater unit of the air conditioning module FIG. 5A;
**FIGS. 6A and 6B** schematically illustrate two example heater units of the heater unit of FIG. 5B; and
**FIG. 7** illustrates a power control circuit of the PCA unit of FIG. 2.

### Detailed Description

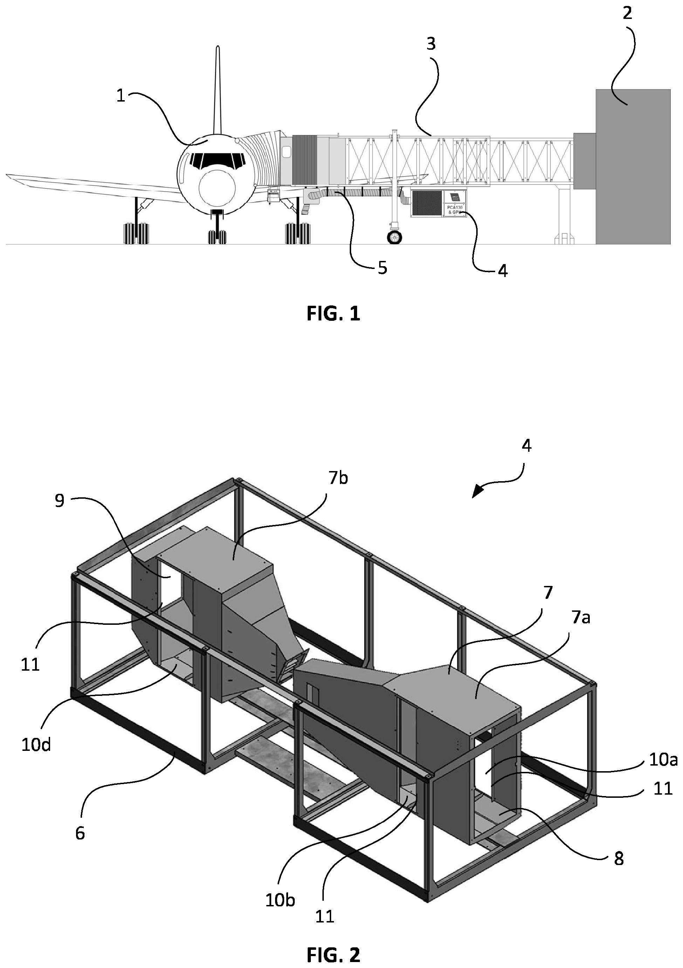

As shown in FIG. 1, when an aircraft 1 is parked on the ground, particularly at an airport boarding gate 2, a passenger bridge 3 may be positioned for boarding and disembarking the aircraft 1. A preconditioned air, PCA, unit 4 may be mounted to the passenger bridge 3 and operable to supply preconditioned air (i.e., heated or cooled air) to the aircraft 1.

In other examples, the PCA unit 4 may be mounted on top of the passenger bridge 3, or the PCA air unit 4 may be located at the apron, in a hangar, or on a vehicle.

As explained below, the PCA unit 4 has a housing where one or more air conditioning modules are arranged. The PCA unit 4 draws ambient air from the environment, and heats or cools the air as it passes through the PCA unit 4. The preconditioned (i.e., heated or cooled) air is conveyed to the aircraft 1 via a hose 5.

In FIG. 2 a frame 6 of the housing of the PCA unit 4 is shown, with the exterior panels removed. As shown, the PCA unit 4 comprises an air duct 7 formed of a first stage air duct 7a and a second stage air duct 7b. In use, ambient air is drawn into the first stage air duct 7a, passes through the first stage air duct 7a and into the second stage air duct 7b. Accordingly, the first stage air duct 7a comprises an air inlet 8, and the second stage air duct 7b comprises an air outlet 9.

A blower fan (not shown) may be provided at the air inlet 8, at the air outlet 9, at the junction of the first and second stage air ducts 7a, 7b, or at any other location along the air duct 7 to drive an air flow from the inlet 8 to the outlet 9 through the air duct 7. The air outlet 9 is connected to the hose (5, see FIG. 1) to convey the preconditioned air to the aircraft (1, see FIG. 1).

The blower fan is preferably a highly efficient centrifugal fan. The blower fan is preferably mounted with vibration dampers and attached with flexible connections to the air duct 7. The air duct 7 may be dimensioned for low air speed in order to prevent free moist carry-over.

As illustrated in FIG. 2, the first stage air duct 7a comprises first and second mounting points 10a, 10b for a first air conditioning module and a second air conditioning module, respectively. The first and second mounting points 10a, 10b are offset in the direction of the air flow (between the air inlet 8 and the air outlet 9). The first and second mounting points 10a, 10b are arranged on opposite sides of the first stage air duct 7a. In use ambient air drawn through the air inlet 8 passes the first air conditioning module and then the second air conditioning module.

The second stage air duct 7b similarly comprises a third mounting point (not shown) and a fourth mounting point 10d for a third air conditioning module and a fourth air conditioning module, respectively. In FIG. 2 the third mounting point is hidden from view on the opposite side of the second stage air duct 7b. The mounting points of the second stage air duct 7b are offset in the direction of the air flow (between the air inlet 8 and the air outlet 9). The third mounting point and the fourth mounting point 10d are arranged on opposite sides of the second stage air duct 7b. In use air drawn into the second stage air duct 7b passes the third air conditioning module and then the fourth air conditioning module.

Each mounting point 10 comprises a slot 11 to accommodate an evaporator of an air conditioning module (see below), and one or more fixing points for attachment of the air conditioning module to the air duct 7.

Accordingly, a plurality of air conditioning modules are mountable to the air duct 7 to successively condition (i.e., cool or heat) air as it passes through the air duct 7.

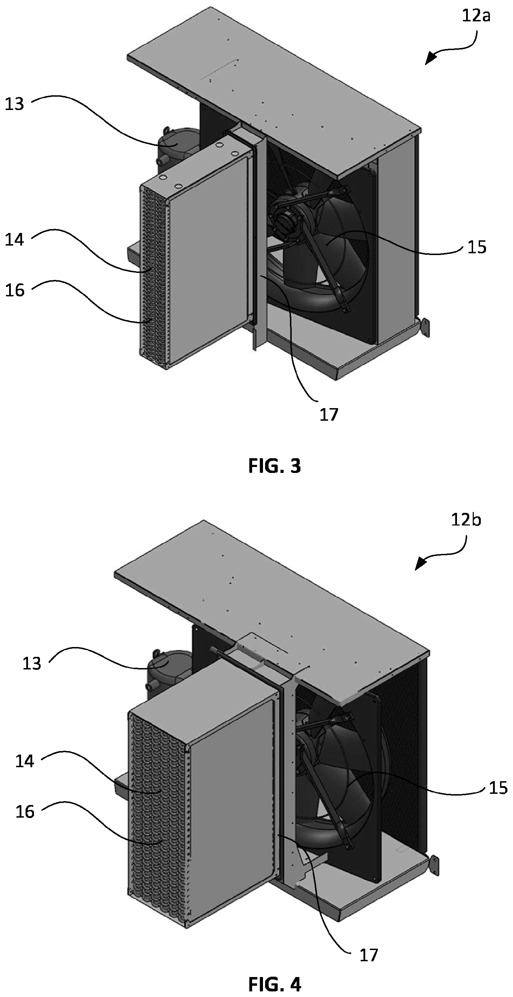

FIG. 3 illustrates an example air conditioning module 12a that is mountable to one of the mounting points 10 in the air duct 7 shown in FIG. 2. The air conditioning module 12a comprises a refrigerant system comprising a compressor 13, a condenser (not shown), an expansion valve (not shown), and an evaporator 14 connected in series in a refrigerant circuit. The refrigerant circuit contains a refrigerant. The refrigerant system operates in accordance with well-known refrigerator principles and detailed description is not included here.

A condenser fan 15 may be provided to generate an air flow over the condenser in order to increase heat dissipation on the external side of the PCA unit (4, see FIG. 2). The condenser fan 15 may be mounted in an aperture of the exterior panels of the PCA unit (4, see FIG. 2). One condenser fan 15 may be provided for each of a plurality of air conditioning modules 12a, or a single condenser fan 15 may operate to generate air flow over the condenser of more than one of the air conditioning modules 12a.

The compressor 13 is operable to drive a refrigerant through the refrigerant circuit, including the evaporator 14. The compressor 13 comprises an electric motor, in particular a three-phase electric motor. The refrigerant system operates to circulate a refrigerant through the refrigerant circuit to cool air in the vicinity of the evaporator 14.

The evaporator 14 extends across at least a part of the air duct 7 when the air conditioning module 12a is mounted to the air duct 7, in particular at a mounting point 10 shown in FIG. 2. In some cases, the evaporator 14 extends to cover substantially the entire cross-section of the air duct 7. The evaporator 14 has a large number of channels 16 for passage of the air flow in the air duct 7 providing a large surface are for heat exchange between the air flow and the refrigerant flowing inside the evaporator 14. In this way, the evaporator 14 interacts with the air flow in the air duct 7 and cools the air flow.

In use, the compressor 13 is operated and air passing through the air duct 7 passes over the evaporator 14 and is cooled.

As illustrated in FIG. 3, the air conditioning module 12a has a plate 17 arranged to close the slot 11 in the air duct 7 at the respective mounting point 10 shown in FIG. 2. Accordingly, when the air conditioning module 12a is positioned within the PCA unit 4 the evaporator 14 extends into the air duct 7, and the compressor 13, condenser fan 15 and other components remain exterior of the air duct 7. The or each condenser fan 15 is arranged with one side adjacent to the condenser and one side open to atmosphere through a respective opening in the housing of the PCA unit 4.

FIG. 4 illustrates a further example air conditioning module 12b for the PCA unit 4 of FIG. 2. The air conditioning module 12b of FIG. 4 has a larger evaporator 14, as described below, and may be used in higher ambient temperature environments (e.g., the Middle East). The air conditioning module 12b of FIG. 4 is substantially the same as the air conditioning module 12a described with reference to FIG. 3, but the evaporator 14 is larger, in this example two times as large as the evaporator 14 of FIG. 3. In some examples, the evaporator 14 of FIG. 4 has a greater number of condenser tubes, e.g., twice as many, extending across the air duct (7, see FIG. 2). In other examples, the evaporator 14 has the same number of condenser tubes as the evaporator 14 of FIG. 3 and the distance between the condenser tubes is increased. Fins that extend from the condenser tubes may be larger. The greater spacing between the condenser tubes prolongs the time before ice accumulates on the condenser tubes, which is particularly advantageous when sub-zero air temperatures are required due to high ambient temperatures. The compressor 13 is appropriately higher powered and other components adjusted accordingly. The air conditioning module 12b of FIG. 4 thereby provides greater cooling for the air flow in the air duct. The slot 11 in the air duct 7 is correspondingly larger to accommodate the larger evaporator 14.

Referring to FIG. 2, the air conditioning module 12a of FIG. 3 may be mounted to the PCA unit 4 at any of the mounting points 10a-10d. Additionally or alternatively, the air conditioning module 12b of FIG. 4 may be mounted to the PCA unit 4 at any of the mounting points 10a-10d. The air conditioning module 12b may be preferably mounted at mounting point 10d as this is where ice accumulation would be greatest. The air conditioning modules 12a, 12b are operable to cool ambient air as it enters the PCA unit 4 through the air inlet 8 and passes through the air duct 7.

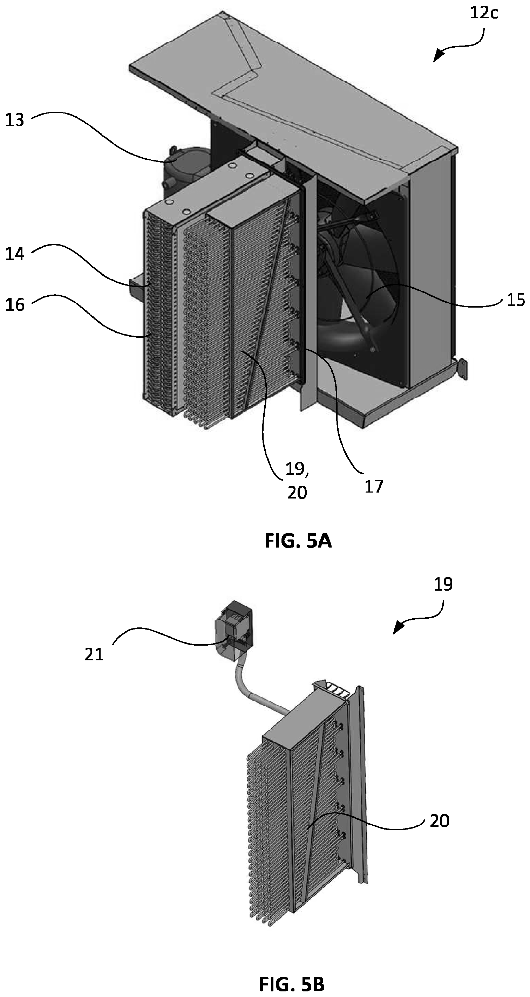

FIGS. 5A and 5B illustrate a further example air conditioning module 12c having a similar structure to the air conditioning modules 12a, 12b of FIGS. 3 and 4. In particular, the air conditioning module 12c of FIG. 5A is mountable at a mounting point 10 of the PCA unit 4 as shown in FIG. 2 and has a refrigerant system with an evaporator 14 arranged to extend across the air duct 7 and operable to cool air as it passes through the air duct 7.

The air conditioning module 12c of FIG. 5A differs from the air conditioning modules 12a, 12b of FIGS. 3 and 4 because it further comprises a heater unit 19. As shown, the heater unit 19 comprises one or more heater elements 20 arranged alongside the evaporator 14 of the refrigerant system. As shown in FIG. 5B, which shows the heater unit 19 in isolation, the heater unit 19 comprises one or more heater elements 20 arranged to extend across the air duct in use, and a power supply connection 21. The power supply connection 21 may include a switch for connecting and disconnecting the heater unit 19, as described further hereinafter. The heater elements 20 operate on DC power and the power supply connection 21 is configured to provide DC power to the heater unit 19 during operation.

Referring to FIG. 2, the air conditioning module 12c of FIG. 5A is preferably positioned in the PCA unit 4 at the fourth attachment point 10d, closest to the air outlet 9. Accordingly, when the PCA unit 4 operates in heating mode (none of the refrigeration systems are operating and the heater unit is operating) the heated air passes directly into the hose (5, see FIG. 2) and does not pass through any (disabled) evaporator 14 of any of the refrigerant systems, which might otherwise reduce the temperature of the air.

Providing a plurality of air conditioning modules 12a, 12b, 12c in the example of FIG. 2 up to four air conditioning modules, means that in a cooling mode air passing through the PCA unit 4 is successively cooled by the air conditioning modules 12a, 12b, 12c. Cooling in multiple steps efficiently condenses the air humidity and can prevent or delay the last downstream evaporator 14 from freezing over. A stainless steel condensate pan (not shown) and integrated condensate pump (not shown) may be provided to remove condensation moisture from the air duct.

The removability of the air conditioning modules 12a, 12b, 12c from the PCA unit 4 enhances the serviceability of the PCA unit 4 since a possible to remove a malfunctioning air conditioning module 12a, 12b, 12c from the PCA unit 4 and replace it with a minimum of down time. In the event that a functioning air conditioning module 12a, 12b, 12c is not available for substitution, the PCA unit 4 can continue to operate with the remaining air conditioning modules, i.e. the PCA unit 4 remains fully operational, however with a lowered cooling capacity. Further, the malfunctioning air conditioning module 12a, 12b, 12c can be moved for repair at a separate site particularly suitable for repair of refrigeration systems. Also, the possible requirement of dismounting and moving the entire PCA unit 4 for repair of a refrigerant circuit is hereby reduced. Preferably, the air conditioning module 12a, 12b, 12c has physical dimensions suitable for movement by a fork lift truck, facilitating transportation of the air conditioning module 12a, 12b, 12c, e.g. for storage, assembly into a PCA unit 4, and servicing.

In some examples, the heater unit 19 may be a separate module attachable to the PCA unit 4 downstream of the last air conditioning module 12. For example, an air conditioning module 12 may comprise only a heater unit 19 and not a refrigerant system (compressor 13, evaporator 14, etc...), and the air conditioning module 12 may be mountable at a mounting point 10 on the PCA unit 4. In other examples, the heater unit 19 may be mounted to the air duct 7 or air outlet 9, or in the hose 5. The heater unit 19 may not be a removable module.

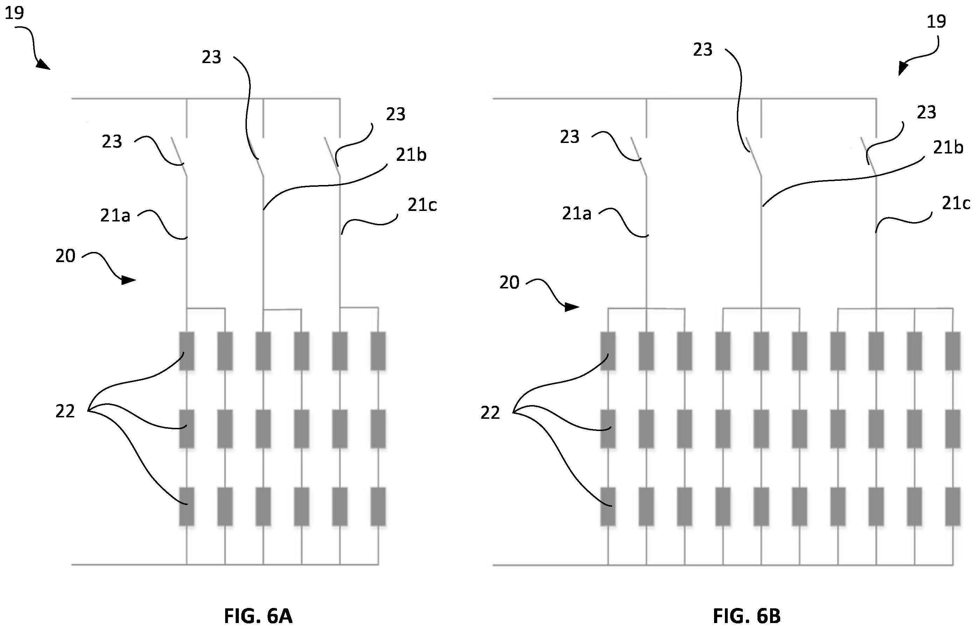

FIGS. 6A and 6B illustrate examples of the heater elements 20 of the heater unit 19. In the example of FIG. 6A the heater elements 20 comprise three parallel groups 21a, 21b, 12c of six heater elements 22. Each heater element 22 may have a rating of 4kW. In the example of FIG. 6B the heater elements 20 comprise three parallel groups 21a, 21b, 21c of nine heater elements. Each heater element 22 may have a rating of 4kW. Each parallel group 21a-21c of heater elements 22 has an individual switch 23, e.g., an IGBT, operable to switch the respective group 21a-21c of heater elements 22 on and off. The switches 23 are controlled by a controller of the PCA unit 4 as described hereinafter. Providing three groups 21a-21c of heater elements 22 allows for the heater unit 19 to be powered by three-phase pulsed DC power, with one phase connected to each group 21a-21c of heater elements 22.

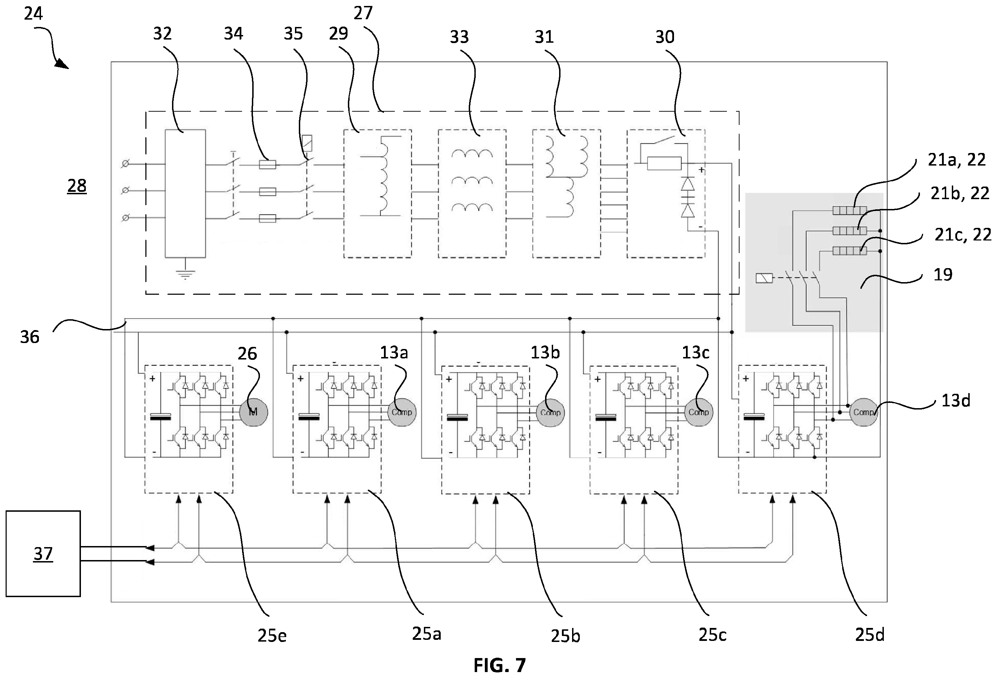

FIG. 7 illustrates the power system 24 for the PCA unit. In this example, the PCA unit has four air conditioning modules, specifically three of the air conditioning modules 12a, 12b shown in FIGS. 3 or 4, and one of the air conditioning module 12c shown in FIGS. 5A and 5B. The power system 24 comprises a variable frequency drive 25a-25d, VFD, for each air conditioning module. First to third VFDs are arranged to provide power to the compressors 13a-13c of three air conditioning modules 12a, 12b of FIGS. 3 and 4. The fourth VFD 25d is arranged to provide power to the compressor 13d and the heater unit 19 of the air conditioning module 12c shown in FIGS. 5A and 5B . A fifth VFD 25e is provided to power a blower fan 26.

As shown in FIG. 7, the power system 24 comprises a power input unit 27 that receives AC input power from an external source 28, in particular the mains power available at the passenger bridge or from a generator, as appropriate. The power input unit 27 converts the input power to an appropriate output power. For example, the input power may be 400 V at 50 Hz, or 480 V at 60 Hz. The input power unit 27 may comprise a transformer 29 for altering the voltage, and/or a 30 rectifier for converting the AC input power to a DC voltage supply for the VFDs 25a-25e.

In order to suppress distortion and pollution of the mains supply, the power input unit 27 may comprise a 12-, 18- or 24-pulse transformer 31 upstream of the rectifier 30. The input power unit 27 may additionally comprise an EMI filter 32, and/or a line inductor 33, and/or fuses 34 and/or contactors 35, as appropriate.

As illustrated in FIG. 7, the input power unit 27 outputs DC voltage to a DC bus 36. The DC bus 36 is connected to the variable frequency drives, VFDs 25a- 25e . Each VFD 25a-25e comprises an inverter stage having a plurality of switches, preferably IGBTs. Each VFD is operable to control the switches to generate three-phase pulsed DC power. The switches of each VFD 25a - 25e can be controlled to vary the waveform of each phase of the three-phase pulsed DC power output. Also, the switches of each VFD 25a - 25e can be controlled to vary the voltage, frequency and phase alignment of the three-phase pulsed DC power output.

As mentioned above, in this example the power system 27 comprises five VFDs 25a - 25e. The first to fourth VFDs 5a-25d are each associated with a different air conditioning module, in particular compressor 13a-13d. The first to third VFDs 25a-25c are each provided to power an air conditioning module 12a, 12b as described with reference to FIG. 3 or FIG. 4. The fourth VFD 25d is provided to power an air conditioning module 12c as described with reference to FIGS. 5A and 5B, which includes a compressor 13d and a heater unit 19. The fifth VFD 25e is provided to power an electric motor of the blower fan 26. The first to fourth VFDs 25a - 25d are capable of being operated to vary the output frequency between 0 Hz to the maximum rated frequency of the compressor 13a - 13d, for example between about 35 Hz and about 75 Hz. The fifth VFD 25e may be operable to vary the frequency between zero and about 55 Hz to vary the speed of the blower fan 26.

The PCA unit has a controller 37 that is configured for controlling the operation of the PCA unit, including the power system 24. The controller 37 may be connected to a user interface for reception of user commands from a user and for outputting messages to the user. The PCA unit may comprise at least one of the following: a user interface panel with input keys and a display, a remote control, a computer interface, a network interface, a loudspeaker, etc. For example, one of the primary user entries specifies the type of aircraft to be supplied by the PCA unit. This information may be entered using entry keys of the user panel, or, using a remote control from the passenger boarding bridge, or, may be transmitted from the building management system of the airport, etc.

A control line is provided between the controller and each of the VFDs. The control line may operate on 24 VDC.

As illustrated, the VFDs 25a-25d are operable to provide a variable frequency power to the compressors 13a-13d of the respective air conditioning modules. The output voltage and frequency supplied by each VFD 25a - 25d is controlled by the controller 37 in a way known in the art of variable frequency drivers. Each VFD 25a - 25d is independently controllable, so the operation of each compressor 13a - 13d (and air conditioning module) can be independently controlled by the controller 37. The controller 37 may control operation of the compressors 13a - 13d based on, for example, the temperature and/or flow rate of the air flow in the flow duct. In particular, the controller 37 may output an individual temperature setting to each of the first to fourth VFDs 25a-25d and, in response to the individual temperature setting, each of the first to fourth VFDs 25a-25d may control the respective compressor 13a-13d and/or heater unit 19 to adjust the temperature of the air flow as required.

As mentioned above, the fourth air conditioning module 12c has a refrigerant system and a heater unit 19 as described with reference to FIGS. 5A and 5B. The fourth VFD 25d is configured to power the compressor 13d of the refrigerant system and the heater unit 19. In particular, the fourth VFD 25d is operable to power either the compressor 13d of the refrigerant system or the heating unit 19 according to whether the PCA unit is operating in a cooling mode or a heating mode.

As shown, the three groups 21a - 21c of heater elements 22 in the heater unit 19 are respectively connected to an output line between the fourth VFD 25d and the compressor 13d. In particular, the fourth VFD 25d has three output lines connected to the three phases of the motor of the compressor 13d. The three groups 21a - 21c of heater elements 22 in the heater unit 19 are respectively connected to one of the three output lines. The heater unit 19 also comprises a set of switches 23 between the heater elements 22 and the fourth VFD 25d for disconnecting the heater unit 19. The switches 23 are operable by the controller 37.

The controller 37 is configured to operate the PCA unit in a cooling mode, to cool air as it passes through the PCA unit, or a heating mode, to heat air as it passes through the PCA unit.

In the cooling mode the controller 37 controls the first to third VFDs 25a - 25c to operate the compressors 13a - 13c and the fifth VFD 25e to operate the blower fan 26 such that air being driven through the PCA unit by the blower fan 26 is cooled. The fourth VFD is controlled to output three-phase power to the compressor 13d, and the switches 23 are open to disconnect the heater unit 19. The three-phase power has a 120 degree phase difference between the three output wires. Accordingly, the compressor 13d (and the refrigerant system) is operated to cool the air. In this cooling mode the air is successively cooled as it passes over the successive evaporators in the air duct.

In the heating mode the controller 37 controls the fourth VFD 25d to output three-phase pulsed DC power, but with the three phases aligned (zero degrees separation). The contactor switches 23 are closed so the heater unit 19 is connected to the fourth VFD 25d. Accordingly, both the heater unit 19 and the compressor 13d are connected to the fourth VFD 25d. Power is thereby provided to the heater elements 22 to generate heat, while the compressor 13d will not operate as the three phases are aligned and so the voltages across the windings in the compressor 13d would be zero. In the heating mode the controller 37 switches off the first to third VFDs 25a - 25c and controls the fifth VFD 25e to power the blower fan 26 and generate air flow through the PCA unit. In this heating mode only the blower fan 26 and the heater unit 19 are operated to heat the air in the air duct.

During the heating mode the fourth VFD 25d is controlled to output three phase pulsed DC power with the pulses aligned, i.e., with zero degrees separation. In the heating mode the phases may have any wave form, for example a square wave form, as there are not any requirements for rotating the compressor 13d. In the heating mode the controller 37 may vary the power of the heater unit 19 by closing and opening switches 23 to connect or disconnect the groups 21a-21c of heater elements 22. Additionally or alternatively, the controller 37 may vary the power of the heater unit 19 by varying the voltage and/or wave form of the power output by the VFD 25d. Preferably, the frequencies of the three pulsed DC outputs from the fourth VFD 25d are fixed to avoid current modulation at the mains input, and to utilise the IGBTs equally. For example, the frequencies of the three pulsed DC outputs may be fixed at 1 kHz.

The controller 37 and/or one or more of the VFDs 25a - 25e may perform data collection of parameter values sensed by sensors of the PCA unit, for example temperature sensors sensing temperatures in the airflow upstream and downstream of the at least one evaporator and of the at least one condenser, pressure sensors sensing the pressure of the refrigerant in the at least one refrigeration system, etc.

In some examples, each of the refrigerant systems has a temperature sensor in electrical connection with the controller 37 or respective VFD 25a - 25d and senses temperatures in the air flow up-stream and down-stream of the evaporator in the air duct. The controller 37 or VFD 25a - 25d can control operation of the compressor 13a - 13d and/or heater unit 19 based on the sensed temperatures.

Also, in a cooling operation mode each of the refrigerant systems operates continuously, i.e. the output voltage and frequency of each VFD 25a - 25d is adjusted to levels required by the respective compressor 13a - 13d in order for it to cool the airflow having interacted with the evaporator substantially to the temperature setting. This increases the life time and decreases power consumption of the refrigerant systems as compared to on/off control of the compressors 13a - 13d.

In some examples, during use the PCA unit 4 may be operated to brake the blower fan 26. In particular, the blower fan 26 may be braked at the end of operation to more quickly stop the blower fan 26 and the air flow being output via the air outlet 9. This may be useful at a time when the PCA unit 4 is to be disconnected from the aircraft 1 and it is preferable to stop air flow in the hose 5 before it is disconnected. The blower fan 26 may have relatively high inertia and may take some time to stop rotating by itself, so braking the blower fan 26 can allow the PCA unit 4 to be disconnected sooner.

In such examples, the fifth VFD 25e, which powers the blower fan 26, can be operated to brake the blower fan 26. The blower fan 26 comprises an electric motor that is powered by the fifth VFD 25e. To brake the blower fan 26 the fifth VFD 25e may be operated under dynamic braking. Preferably, the fifth VFD 25e is operated under regenerative braking such that the electric motor of the blower fan 26 regenerates electrical energy that passes back to the fifth VFD 25e and into the DC bus 36 as illustrated in FIG. 7.

In examples, in order to dissipate the regenerated electrical power during braking of the blower fan 26 the heater unit 19 is operated during braking. It may be preferable to dissipate the regenerated electrical power to prevent an over-voltage situation in the DC bus. The regenerated electrical power will pass from the blower fan 26 (in particular the electric motor of the blower fan 26) to the heater unit 19 via the fifth VFD 25e and the DC bus 36. At the heater unit 19 the electrical energy is dissipated as heat. Once the blower fan 26 has stopped rotating the heater unit 19 can be deactivated.

Accordingly, in a braking method the PCA unit 4 may be operated to brake the blower fan 26 by operating the fifth VFD 25e, regenerating electrical energy, and simultaneously operating the heater unit 19 to dissipate the regenerated electrical energy. The braking method may be performed after each of the compressors 13a-13d has been stopped. Once the blower fan 26 has stopped rotating the heater unit 19 may be deactivated. Once the blower fan 26 has stopped the PCA unit 4 may be disconnected from the aircraft 1 by disconnecting the hose 5.

## Claims

1. A method of operating a preconditioned air, PCA, unit (4),
wherein the PCA unit comprises:
an air duct (7) with an air inlet (8) and an air outlet (9) connectable to a hose (5) for conveying preconditioned air towards an aircraft,
a blower fan (26) operable to generate air flow through the air duct, the blower fan being powered by a variable frequency drive, VFD (25e),
a heater unit (19) operable to heat the air flow passing through the air duct, and
a DC bus (36) arranged to provide electrical power to the blower fan and the heater unit,
and wherein the method comprises operating the VFD to brake the blower fan and simultaneously operating the heater unit to dissipate electrical energy regenerated by the blower fan during braking.

2. The method of claim 1, comprising operating the VFD (25e) to brake the blower fan before the PCA unit (4) is disconnected from the aircraft.

3. The method of claim 1 or claim 2, wherein the PCA unit further comprises one or more refrigerant systems, each refrigerant system having a compressor (13).

4. The method of claim 3, wherein the VFD (25e) is operated to brake the blower fan (26) after the or each compressor (13) has been deactivated.

5. The method of any one of claim 1 to claim 4, further comprising deactivating the heater unit (19) after the blower fan (26) has stopped rotating.

6. The method of claim 5, comprising detecting rotation of the blower fan (26), and/or detecting the regenerated electrical energy in order to detect rotation of the blower fan.

7. A preconditioned air, PCA, unit for providing preconditioned air to an aircraft parked on the ground, the PCA unit comprising:
an air duct (7) with an air inlet (8) and an air outlet (9) connectable to a hose (5) for conveying preconditioned air towards the aircraft,
a blower fan (26) operable to generate air flow through the air duct, the blower fan being powered by a variable frequency drive, VFD (25e),
a heater unit (19) operable to heat the air flow passing through the air duct,
a DC bus (36) arranged to provide electrical power to the blower fan and the heater unit, and
a controller (37) operable to control the blower fan (26) and the heater unit (19), wherein the controller is configured to operate the VFD (25e) to brake the blower fan and simultaneously operate the heater unit (19) to dissipate electrical energy regenerated by the blower fan during braking.

8. The PCA unit of claim 7, wherein the controller is configured to operate the VFD (25e) to brake the blower fan (26) before the PCA unit (4) is disconnected from the aircraft.

9. The PCA unit of claim 7 or claim 8, wherein the PCA unit further comprises one or more refrigerant systems, each refrigerant system having a compressor (13).

10. The PCA unit of claim 9, wherein the controller is configured to operate the VFD (25e) to brake the blower fan (26) after the or each compressor (13) has been deactivated.

11. The PCA unit of any one of claim 7 to claim 10, wherein the controller is configured to deactivate the heater unit (19) after the blower fan (26) has stopped rotating.

12. The PCA unit of claim 11, further comprising a sensor arranged to detect rotation of the blower fan (26), and/or a sensor arranged to detect the regenerated electrical energy to detect rotation of the blower fan.
